# EUROPÄISCHE PATENTSCHRIFT

(11) **EP 0 507 783 B1**
(45) Veröffentlichungstag und Bekanntmachung des Hinweises auf die Patenterteilung: **08.06.1994**
(21) Anmeldenummer: 90917611.7
(22) Anmeldetag: 30.11.1990
(51) Int. Cl.: B01J 8/12, B01J 8/00, B01D 53/08

(54) **VORRICHTUNG ZUM ABTRENNEN UNERWÜNSCHTER ABGASBESTANDTEILE**
DEVICE FOR THE SEPARATION OF UNDESIRED EXHAUST GAS COMPONENTS
DISPOSITIF POUR LA SEPARATION DE COMPOSANTS INDESIRABLES DE GAZ D'ECHAPPEMENT

(30) Priorität: 05.01.1990 DE 4000203
(43) Veröffentlichungstag der Anmeldung: 14.10.1992
(73) Patentinhaber: STEAG Aktiengesellschaft, 45128 Essen (DE)
(72) Erfinder: BRÜGGENDICK, Hermann, D-4224 Hünxe (DE); KLINGINGER, Karl, D-4300 Essen 14 (DE)
(86) Internationale Anmeldenummer: EP9002057
(87) Internationale Veröffentlichungsnummer: WO9109672

(56) Entgegenhaltungen:
- DE-A- 3 732 567
- GB-A- 2 116 869
- US-A- 2 882 912

## Beschreibung

Die Erfindung bezieht sich auf eine Adsorptionsvorrichtung zum Abtrennen unerwünschter Bestandteile aus einem Fluid, insbesondere einem Abgas, mit einem einen Reaktionsraum begrenzenden Reaktor, der kopfseitig Aufgabemittel und fußseitig einen Boden aus rasterförmig angeordneten Abzugstrichtern zur Aufgabe und zum Austrag eines granulatartigen oder körnigen Adsorptionsmittels aufweist, wobei im Boden von Verteilelementen überdachte Einströmöffnungen ausgebildet sind, durch die das Fluid von unten in den Reaktorraum einströmen kann.

Derartige Adsorptionsvorrichtungen werden als Gegenstromreaktoren betrieben, wobei das zumeist körnige Adsorptionsmittel unterhalb des Bodens kontinuierlich oder intermittierend nach unten ausgetragen wird und entsprechend dem Austrag die Adsorptionsmittelsäule nach unten wandert. Das zu behandelnde Fluid wird der Wanderrichtung des Adsorptionsmittels entgegen durch den Reaktionsraum geleitet. Um einen hohen Reaktionswirkungsgrad zu erreichen, ist es wichtig, daß das Fluid die Adsorptionsmittelsäule möglichst gleichmäßig durchströmt und das körnige Adsorptionsmittel möglichst gleichmäßige Wanderverhältnisse im Reaktionsraum vorfindet.

Aus der DE-OS 37 32 567 ist ein Anströmboden für Wanderbettreaktoren bekannt, der eine gute Einströmverteilung des Fluids und ein möglichst gleichmäßiges Abzugsverhalten des schüttfähigen Adsorptionsmittels gewährleisten soll. Dieser bekannte Anströmboden hat wabenförmig neben- und hintereinander angeordnete Schüttgutabzugstrichter, in deren Seitenwände Durchtrittsöffnungen für das Fluid ausgebildet sind. Über jeder Durchtrittsöffnung ist ein dachförmiges Verteilelement für das Fluid angeordnet, und zwar so, daß es den Trichter von einer Wand zur anderen Wand brückenartig überspannt.

Die Erfindung löst die Aufgabe, eine gleichmäßige Einströmung und Durchströmung des Adsorptionsmittelbetts mit dem zu behandelnden Fluid und einen gleichmäßigen und störungsfreien Abzug des Adsorptionsmittels durch den Adsorber-Boden mit besonders einfachen baulichen Mitteln zu erreichen.

Bei der Adsorptionsvorrichtung der eingangs genannten Art, wird diese Aufgabe erfindungsgemäß dadurch gelöst, daß zwischen gegenläufig geneigten Wänden des Bodens eine nach oben offene Rinne gebildet ist, in der abwechselnd Einströmöffnungen und Trichter-Mündungsöffnungen angeordnet sind, und daß jedes Verteilelement als pyramiden-, kegel-, pyramidensektoroder kegelsektorartige Haube ausgebildet ist, deren Unterkanten zumindest abschnittsweise von den gegenläufig geneigten Wänden des Bodens zur Bildung von Fluiddurchtrittsöffnungen vertikal beabstandet sind.

Bei der erfindungsgemäßen Adsorptionsvorrichtung wird das aus einer Einströmöffnung austretende Fluid ringförmig und gleichmäßig auf das umgebende Adsorptionsmittel verteilt und durch zwei angrenzende Abzugstrichter ausgetragen. Dadurch ergeben sich optimale Verteilungsverhältnisse über den Adsorptionsmittelquerschnitt sowohl im Trichterbereich als auch in dem darüberliegenden Adsorptionsmittelbett. Die vorzugsweise pyramidenförmigen Hauben jedes Verteilelements bilden selbst Wände, die das schüttfähige Adsorptionsmittel nach zwei Seiten in zwei zwischen einem Paar von gegenläufig geneigten Rinnenwänden gelegenen Trichter aufteilen. Sie unterstützen damit die Trichterwirkung oberhalb der Mündungsöffnungen. Aufgrund dieser Doppelfunktion der Hauben kann die Anzahl der den Boden bildenden Einbauelemente minimiert werden. Trotzdem sind die für den Fluideintritt in das Adsorptionsmittelbett verfügbaren freien Einströmquerschnitte vergleichsweise groß und gleichmäßig über den gesamten Reaktorboden verteilt. Auch die Bauhöhe des Bodens kann gering gehalten werden.

Vorzugsweise hat die Haube eine in Rinnenrichtung und/oder quer zur Rinnenrichtung verlaufende maximale Querschnittsabmessung, wobei zwei benachbarte Hauben die dazwischenliegende Trichter-Mündungsöffnung teilweise überdachen. Diese Ausbildung ermöglicht es, daß das Fluid im wesentlichen unterbrechungsfrei über den gesamten Haubenumfang in den Reaktionsraum einströmen kann.

In einer bevorzugten Ausführungsform der Erfindung ist unter jeder Haube ein in eine Einströmöffnung mündender Einströmkanal angeordnet. Der Einströmkanal hat im Bereich der Einströmöffnung ein großes Öffnungsprofil für den Eintritt des Fluid in die Schüttgutkegel unter der Haube und damit einen geringen Strömungswiderstand.

Den unteren Enden der Abzugskanäle sind Mittel zum dosierten Austragen des Adsorptionsmittels vorgesehen. Nach einem besonderen Aspekt der vorliegenden Erfindung weisen diese Austragsmittel einen Abzugsrechen auf, der an wenigstens einer Lagerachse schwingend aufgehängt ist und von der Austrittsöffnung auf einen darunterliegenden Zwischenspeicherboden aufgeböschtes Adsorptionsmittel zur Seite in eine Austragsöffnung schiebt. Die Schwenklager des Abzugsrechens können am Reaktorgehäuse, am Gegenstromboden oder an einem besonderen Tragge- stell angeordnet sein. Als Antriebsvorrichtung für den Abzugs- rechen eignet sich besonders ein Kurbeltrieb.

Weitere vorteilhafte Ausgestaltungen der Erfindung sind in den Unteransprüchen gekennzeichnet. Auch Teilkombinationen der in verschiedenen Ansprüche beanspruchten Merkmale gelten als erfindungswesentlich offenbart.

Im folgenden wird die Erfindung anhand von in der Zeichnung dargestellten Ausführungsbeispielen näher erläutert. In der Zeichnung zeigen:
- Fig. 1: eine schematische Ansicht von oben in den Reaktionsraum und auf den Reaktorboden einer Gegenstrom-Adsorptionsvorrichtung nach der Erfindung;
- Fig. 2: eine Schnittansicht entlang der verspringenden Schnittlinie II-II in Fig. 1, beschränkt auf den unteren Abschnitt des Reaktors mit dem Reaktorboden, dem Adsorptionsmittelabzug und den Fluid-Einströmkanälen, wobei der rechte Teilschnitt mit Adsorptionsmittelschüttung gezeigt ist;
- Fig. 3: eine Schnittansicht entlang der Schnittlinie III-III in Fig. 1 auf den in Fig. 2 gezeigten Vorrichtungsabschnitt;
- Fig. 4: eine Draufsicht auf ein abgewandeltes Ausführungsbeispiel des Reaktorbodens mit trichterförmigen Basiselementen; und
- Fig. 5: eine Schnittansicht entlang V-V in Fig. 4.

Die Adsorptionsvorrichtung ist in der Zeichnung nur in ihrem unteren Abschnitt gezeigt. Die Adsorptionsvorrichtung hat ein Reaktorgehäuse 1 mit einer Reaktionskammer 2, einen Reaktor- bzw. Gegenstromboden 3, kaminartige Einströmkanäle 4, Abzugskanäle 5 und einen Austrag 6. Der Kopfbereich des Reaktors und die zugehörige Aufgabeeinrichtung für das schüttfähige Adsorptionsmittel 8 sind in der Zeichnung nicht dargestellt; sie können herkömmlicher Ausführung sein.

Während des Betriebs strömt das Adsorptionsmittel 8 kontinuierlich oder intermittierend unter Schwerkrafteinfluß in der Reaktionskammer 2 von oben nach unten, wird am Reaktorboden 3 über Trichter 10 in Mündungsöffnungen 11 geleitet und von dort durch die Abzugskanäle 5 dem Reaktoraustrag 6 zugeführt.

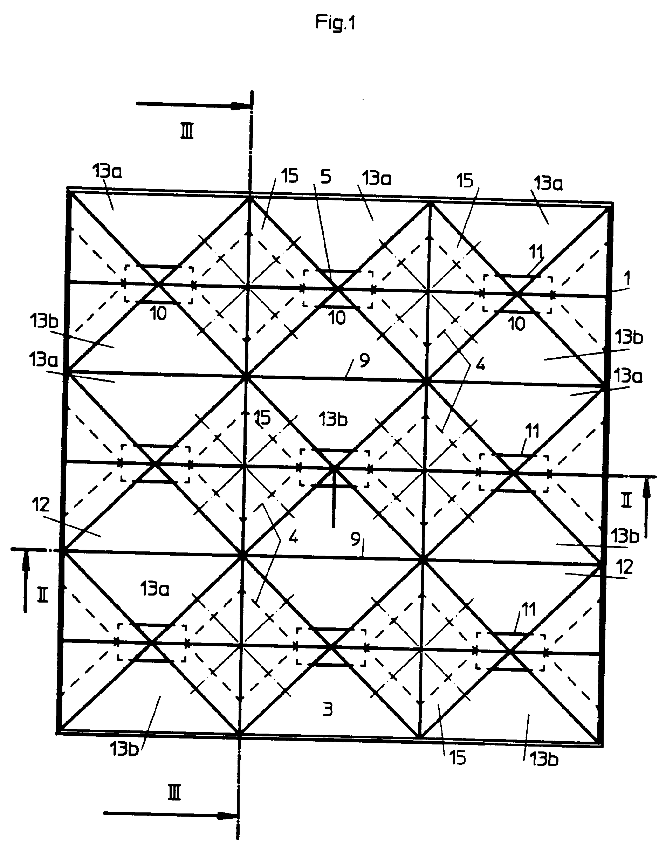

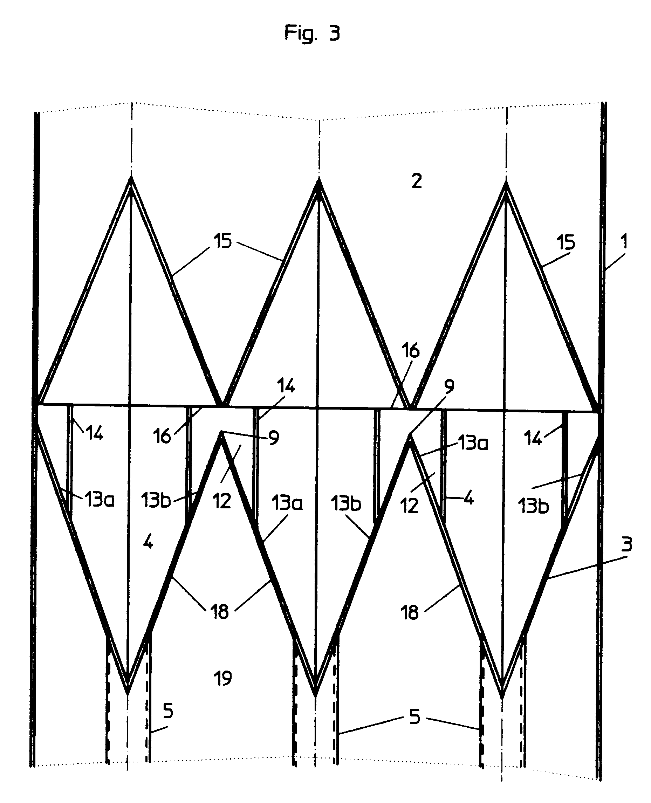

Für die Erfindung von besonderer Bedeutung ist die Ausbildung des Reaktorbodens 3, durch den das zu behandelnde Fluid im wesentlichen entgegen der Wanderrichtung des schüttfähigen Adsorptionsmittels 8 in gleichmäßiger Verteilung durch die Reaktionskammer und das diese durchwandernde Adsorptionsmittel geleitet wird. Der Reaktorboden 3 weist, wie am besten in Fig. 1 zu erkennen ist, ein rechteckiges Trichterraster auf. Eine Trichterreihe ist in einer nach oben offenen Rinne 12 gebildet (Fig. 3), die jeweils aus zwei gegenläufig geneigten Wänden 13a und 13b besteht. Zwei benachbarte Rinnen 12 sind durch einen ebenfalls von geneigten Wänden 13b und 13a begrenzten Dachfirst 9 voneinander getrennt. In jeder Rinne 12 sind in gleichmäßigem Raster abwechselnd Trichter-Mündungsöffnungen 11 (zum Abziehen des Adsorptionsmittels) und Fluid-Einströmöffnungen 14 angeordnet. Jede Einströmöffnung 14 ist von einem Fluid-Verteilelement in Form einer pyramiden- bzw. pyramidensektorförmigen Haube 15 abgedeckt. Jede Verteilhaube 15 ist über die Fluideinströmöffnung 14 nach außen soweit überhängend angeordnet, daß zwischen Unterkante 16 der Haube 15 und der die Fluideinströmöffnung 14 begrenzenden Mündung des Einströmkanals 4 ein ausreichend großer freier Ringraum entsteht, durch den das Fluid in das umgebende schüttfähige Adsorptionsmittel einströmt. Zwei Sektorwände jeder pyramidenförmigen Haube 15 sind einem Trichter 10, die beiden anderen Sektorwände dem benachbarten Trichter 10 innerhalb einer Rinne 12 zugeordnet. Die Pyramidensektorwände sind mit Abstand oberhalb der Rinnenwände 13a und 13b angeordnet, so daß das auf den Pyramidensektorwänden abwärts rutschende Gut auf die geneigten Rinnenwände 13a und 13b und von dort weiter in Richtung der Mündungsöffnungen 11 geleitet wird. Diese Zwangskanalisierung des schüttfähigen Adsorptionsgutes in den Bereich der jeweiligen Trichtermündung ist begleitet von der entlang des Haubenumfangs bzw. der Unterkante 16 gleichmäßigen Verteilung des zu behandelnden Fluids. Das Fluid wird also aus jeder Einströmöffnung 14 in die Bereiche zweier benachbarter Trichter 10 geleitet und dort entgegen der Schüttrichtung des Adsorptionsmittels durch das Adsorptionsmittelbett im Reaktionsraum 2 und gleichmäßig über dessen Querschnittsprofil verteilt nach oben geleitet.

Jeder Einströmkanal 4 ist bei dem Ausführungsbeispiel gemäß den Figuren 1 bis 3 als Kamin mit quadratischem Querschnitt ausgebildet, der sattelartig zwischen die geneigten Wände 13a und 13b einer Rinne 12 eingesetzt ist. Die mit den geneigten Wänden 13a und 13b abschließenden Unterkanten 18 des Kamins laufen auf der Rinnenachse nach unten V-förmig zusammen. Unten mündet jeder Einströmkanal bzw. Kamin 4 in einen gemeinsamen Gasraum 19.

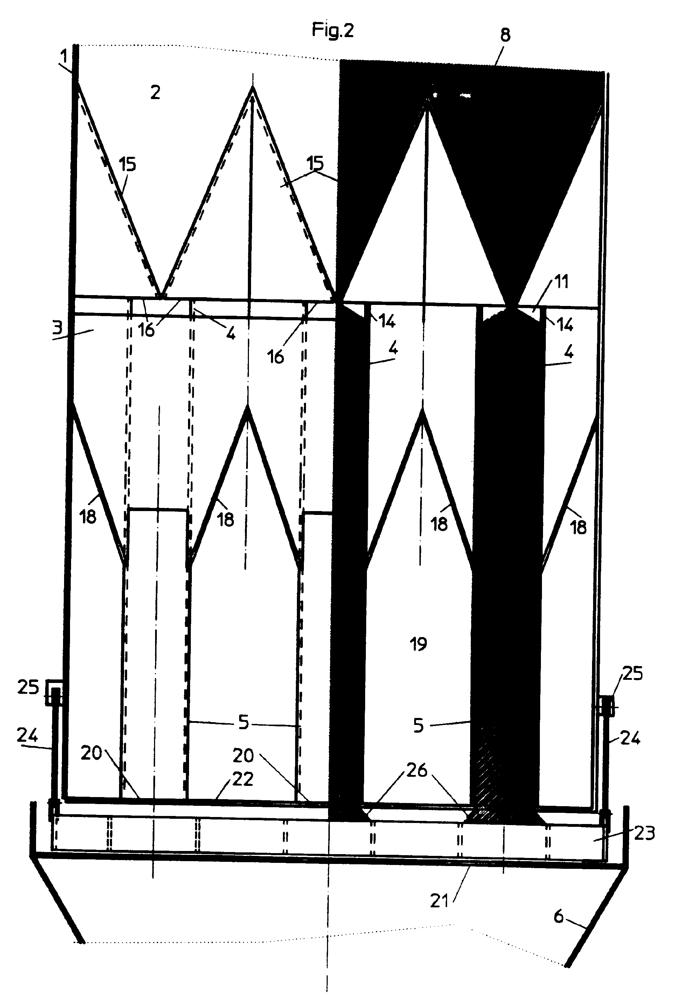

Die Abzugskanäle 5 für das Adsorptionsmittel haben jeweils eine vertikale Zentralachse. Ihr Einlauf bildet jeweils eine Trichter--Mündungsöffnung 11. Der Einlauf 11 stößt, wie in den Figuren 1 und in der rechten Hälfte der Figur 2 zu erkennen ist, unmittelbar an jeweils eine Ecke der beiden benachbarten Kamine 4 an. Dadurch sind alle Strömungsfäden des schüttfähigen Adsorptionsmittel im Bereich des Trichters 10 auf den Einlauf jedes Abzugskanals 5 gerichtet, und Materialstaus oder Totzonen werden zuverlässig vermieden.

Alle Abzugskanäle haben in der Ebene einer den Gasraum 19 unten begrenzenden Abschlußplatte 22 liegende untere Austrittsöffnungen 20 (Fig. 2). Aus ihnen austretendes schüttfähiges Adsorptionsmittel böscht sich auf horizontalen Abschnitten eines Zwischenspeicherbodens 21 ab. Im horizontalen Raum zwischen dem Zwischenspeicherboden 21 und der Abschlußplatte 22 ist ein Abzugsrechen 23 angeordnet. Der Abzugsrechen ist über Schwenkarme 24 an Schwenklagern 25 aufgehängt. An dem Abzugsrechen sind Schaufelflächen ausgebildet, die im Verlauf des nahezu horizontalen Bewegungsspiels des Rechens 23 im Spalt zwischen den Böden 21 und 22 die aufgeböschten Schüttkegel 26 in Austragsöffnungen zwischen benachbarten Zwischenspeicherbodenabschnitten schieben. Das durch die Austragsöffnungen fallende Schüttgut wird über den trichterförmigen Austrag 6 ausgetragen. Es ergibt sich ein durch den Arbeitstakt und die Transportmenge des Rechens 23 dosierter Abzug des schüttfähigen Adsorptionsmittels aus den Abzugskanälen 5 bzw. durch den Reaktorboden 3. Einer verschleinanfälligen Rollen- oder Gleitlagerung bedarf es bei dieser pendelnden Rechenausführung nicht. Der Antrieb des Rechens erfolgt vorzugsweise über einen geeigneten Kurbeltrieb oder einen direkt oder indirekt am Rechen angreifenden, horizontal wirkenden Kolben-Zylinderantrieb.

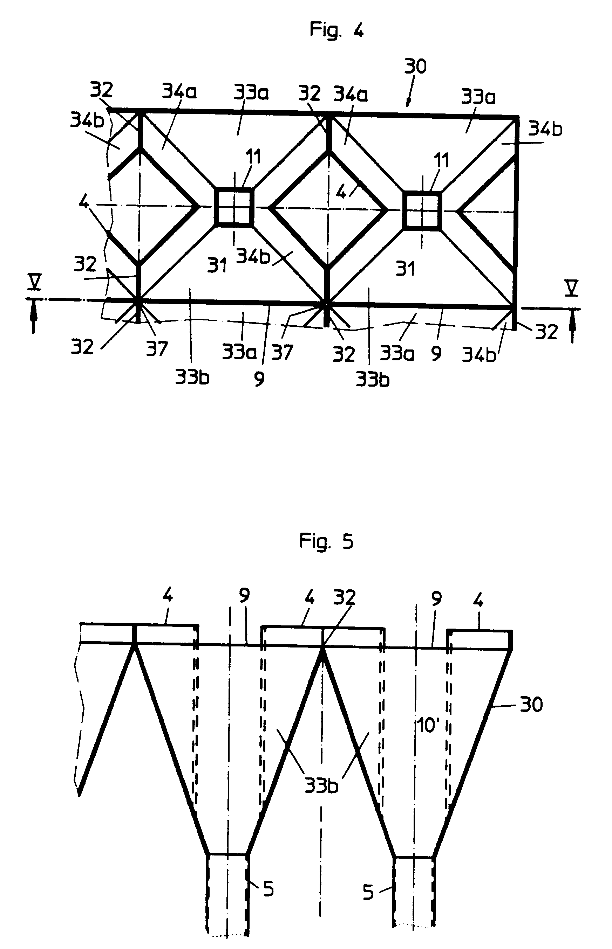

In den Figuren 4 und 5 ist eine Teildarstellung einer alternativen Ausführungsform eines Reaktor- bzw. Gegenstrombodens 30 veranschaulicht. Die Ansichten sind ähnlich denjenigen gemäß den Figuren 1 und 2, wobei allerdings in Figur 4 die pyramidenförmigen Abdeckelemente fortgelassen sind. Die in den Figuren 4 und 5 dargestellte Ausführungsform unterscheidet sich von dem zuvor beschriebenen Ausführungsbeispiel vor allem dadurch, daß die Rinnen jeweils durch Querfirste 32 in Rinnenabschnitte 31 unterteilt sind. In jedem quadratischen Rinnenabschnitt ist ein Trichter 10′ von vier zur Mündungsöffnung 11 hin geneigten Keilflächen begrenzt. Die beiden Keilflächen 33a und 33b entsprechen den geneigten Rinnenwänden 13a und 13b des zuvor beschriebenen Ausführungsbeispiels; die quer zum Rinnenverlauf angeordneten anderen beiden Keilflächen 34a und 34b sind jeweils entsprechend dem angrenzenden Kaminprofil 4 dreieckig ausgeschnitten. Bei dieser Ausführungsform sorgen die beiden Keilfächenpaare 33a, 33b und 34a, 34b für einen auf die Mündungsöffnung 11 gerichteten, allseits im wesentlichen gleichen Schüttwinkel. Die die einzelnen Trichter 32 begrenzenden Keilflächen 33, 34 enden oben in Firsten 9 bzw. 32. Die zueinander rechtwinklig verlaufenden Firste 9 und 32 sind bei diesem Ausführungsbeispiel in einer zur Zeichenebene in Fig. 4 parallel verlaufenden Ebene angeordnet.

Die Ausführungsform nach den Figuren 4 und 5 hat den Vorteil eines besonders günstigen Fließverhaltens des schüttfähigen Adsorptionsmittels im Bereich des Reaktorbodens, insbesondere in den den Kaminen unmittelbar benachbarten Bereichen auf den ausgeschnittenen Keilflächen 34a und 34b. Demgegenüber hat die Ausführungsform gemäß dem ersten Ausführungsbeispiel (Figuren 1 bis 3) den Vorteil einer baulich besonders einfachen Ausführung, da die geneigten Keilflächen 34a und 34b fortfallen und die geneigten Rinnenwände 13a und 13b über die verschiedenen Trichterelemente im Reaktorboden ununterbrochen fortgesetzt sind. Bei dem Ausführungsbeispiel gemäß den Figuren 4 und 5 sind die geneigten Rinnenwände, wie gesagt, an den Kreuzungsstellen 37 zu kurzen Stegen oder Punkten entartet.

Zwischen diesen beiden extremen Ausführungsbeispielen gibt es vielfältige Variationen, die sich vor allem dadurch unterscheiden, daß der First 32 gegenüber dem First 9 und/oder vertieft geneigt angeordnet ist, so daß einerseits die geneigten Rinnenwände 13a und 13b vom linken bis zum rechten Bodenende durchlaufen und andererseits die den Keilflächen 34 vergleichbaren Zwickelwände neben den Kaminen 4 in den Boden eingezogen sind.

Die Neigung sowohl der pyramidenförmigen Hauben bzw. Verteilelemente 15 als auch der geneigten Wände 13a, 13b bzw. 33a, b und 34a, b richtet sich nach dem Schüttverhalten des über die Wände unter Schwerkrafteinfluß zu transportierenden schüttfähigen Adsorptionsmittels. Einerseits muß das Adsorptionsmittel behinderungsfrei über die Trichterwände und Wände der Verteilelements fließen können und andererseits sind vergleichsweise geringe Neigungswinkel zur Minimierung der Vertikalabmessung des Bodens bevorzugt.

## Patentansprüche

1. Vorrichtung zum Abtrennen unerwünschter Bestandteile aus einem Fluid, insbesondere einem Abgas, mit einem einen Reaktionsraum (2) begrenzenden Reaktor (1), der kopfseitig Aufgabemittel und fußseitig einen Boden aus rasterförmig angeordneten Abzugstrichtern (10) zur Aufgabe und zum Austrag eines granulatartigen oder körnigen Adsorptionsmittels aufweist, wobei im Boden von Verteilelementen (15) überdachte Einströmöffnungen (14) ausgebildet sind, durch die das Fluid von unten in den Reaktionsraum einströmen kann,
**dadurch gekennzeichnet**,
daß zwischen zwei gegenläufig geneigten Wänden (13a, 13b; 33a, 33b) des Bodens (3; 30) eine nach oben offene Rinne (12; 31, 31) gebildet ist, in der abwechselnd Einströmöffnungen (14) und Trichter-Mündungsöffnungen (11) angeordnet sind, und daß jedes Verteilelement als pyramiden-, kegel-, pyramidensektor- oder kegelsektorartige Haube (15) ausgebildet ist, deren Unterkanten (16) zumindest abschnittsweise von den gegenläufig geneigten Wänden (13a, 13b; 33a, 33b, 34, 34b) des Bodens (3; 30) zur Bildung von Fluid-Durchtrittsöffnungen vertikal beabstandet sind.

2. Vorrichtung nach Anspruch 1, dadurch gekennzeichnet, daß die Haube (15) eine in Rinnenrichtung und/oder quer zur Rinnenrichtung verlaufende maximale Querschnittsabmessung hat.

3. Vorrichtung nach Anspruch 2, dadurch gekennzeichnet, daß jede Trichter-Mündungsöffnung (11) vom den ihr benachbarten Hauben (15) teilweise überdacht ist.

4. Vorrichtung nach einem der Ansprüche 1 bis 3, dadurch gekennzeichnet, daß die Hauben (15) pyramiden- oder pyramidensektorförmig ausgebildet sind, wobei zwei Pyramidenecken mit der Mittellinie der zugehörigen Rinne (12) ausgerichtet sind und daß ein Einströmkanal (4) mit rechteckigem Querschnitt axial zum Pyramidenscheitel ausgerichtet ist.

5. Vorrichtung nach einem der Ansprüche 1 bis 4, dadurch 9ekennzeichnet, daß im wesentlich vertikal verlaufende Abzugskanäle (5) an die Trichter-Mündungsöffnungen (11) angeschlossen sind und wesentlich kleinere Querschnitte haben als die Fluid-Einströmöffnungen (14).

6. Vorrichtung nach einem der Ansprüche 1 bis 5, dadurch gekennzeichnet, daß die Fluid-Einströmkanäle als Kamine (4) ausgebildet sind, die von der Rinnenmitte ausgehen und höher gezogen sind als die die Trichter (10; 31) begrenzenden geneigten Wände (13a, 13b; 33a, 33b, 34a, 34b).

7. Vorrichtung nach einem der Ansprüche 1 bis 6, dadurch gekennzeichnet, daß die Rinnen (12) ein dachkantartiges Quer- Schnittsprofil haben und daß zwei benachbarte parallele Rinnen durch einen First (9) begrenzt sind.

8. Vorrichtung nach Anspruch 6 oder 7, dadurch gekennzeichnet, daß der Kamin (4) mit je einer vertikalen Ecke an Trichter-Mündungsöffnungen (11) zweier benachbarter Trichter (10) angrenzt.

9. Vorrichtung nach einem der Ansprüche 6 bis 8, dadurch gekennzeichnet, daß zu den Rinnenbegrenzungswänden (33a, 33b) quer verlaufende geneigte Wände (34a, 34b) jeweils an einen Kamin (4) angrenzen und zur Trichter-Mündungsöffnung (11) hin abfallend ausgebildet sind.

10. Vorrichtung nach Anspruch 9, dadurch gekennzeichnet, daß die quer verlaufenden Wände (34a, 34b) gemeinsam mit dem zugehörigen Kamin (4) die Rinne in Abschnitte (31) unterteilen, wobei in jedem Abschnitt ein Trichter und eine zentrale Mündungsöffnung (11) gebildet sind.

11. Vorrichtung nach Anspruch 10, dadurch gekennzeichnet, daß die Querwände (34a, 34b) zweier benachbarter Rinnenabschnitte (31) in einem oberen Querfirst (32) zusammenlaufen.

12. Vorrichtung nach Anspruch 11, dadurch gekennzeichnet, daß die Querfirste (32) auf einem einheitlichen Niveau liegen, das niedriger oder gleich dem Niveau der die Rinnen (12) trennenden Firste (9) ist.

13. Vorrichtung nach einem der Ansprüche 1 bis 12, dadurch gekennzeichnet, daß die Abzugskanäle (5) untere Austrittsöffnungen (20) haben, unter denen mit Abstand ein Zwischenspeicherboden (21) angeordnet ist, und daß ein Austragsrechen (23) an wenigstens einer Lagerachse schwingend aufgehängt ist und in den Raum zwischen den Austrittsöffnungen und dem Zwischenspeicherboden (21) mit solchem Bewegungsspiel eingreift, daß er auf dem Zwischenspeicherboden (21) aufgeböschtes Adsorptionsmittel quer zur Schüttrichtung in eine seitliche Austragsöffnung transportiert.

14. Vorrichtung nach Anspruch 13, dadurch gekennzeichnet, daß dem Rechen (23) ein Kurbeltrieb zugeordnet ist.

## Revendications

1. Dispositif pour la séparation de composants indésirables d'un fluide, notamment d'un gaz d'échappement, avec un réacteur (1) délimitant un espace de réaction (2), et qui présente côté tête des moyens de chargement et, côté pied, un fond en trémis d'évacuation (10) disposée en forme de grille pour le chargement et pour l'évacuation d'un moyen d'adsorption granulé ou grenu, dans le fond étant réalisées des ouvertures d'afflux (14) sur lesquelles des éléments de répartition (15) sont disposés en forme de toits, et à travers lesquels le fluide peut entrer depuis le bas dans l'espace de réaction, caractérisé en ce qu'une rainure ouverte vers le haut (12; 31, 31) est réalisé entre deux parois inclinées opposées (13a, 13b; 33a, 33b) du fond (3; 30) et dans laquelle sont disposées en alternance des ouvertures d'afflux (14) et des ouvertures dans lesquelles débouchent les trémis (11), et en ce que chaque élément de répartition est réalisé sous forme de capot (15) en forme de pyramide, de cône, de secteur de pyramide ou de secteur de cône dont les arêtes inférieures (16) se trouvent à une certaine distance verticale, au moins par tronçons, des parois inclinées opposées (13a, 13b; 33a, 33b, 34, 34b) du fond (3; 30) pour former des ouvertures de passage de fluide.

2. Dispositif selon la revendication 1, caractérisé en ce que le capot (15) présente une dimension maximale en section transversale s'étendant suivant le sens de la rainure et/ou transversalement au sens de la rainure.

3. Dispositif selon la revendication 2, caractérisé en ce que chaque ouverture (11) dans laquelle débouche une trémie est recouverte partiellement par les capots formant toit (15) avoisinant.

4. Dispositif selon l'une des revendications 1 à 3, caractérisé en ce que les capots (15) sont réalisés sous forme de pyramide ou de secteur de pyramide, deux coins de pyramide étant alignés avec la ligne médiane de la rainure associée (12), et un canal d'afflux (4) avec une section transversale rectangulaire étant orienté axialement au sommet de la pyramide.

5. Dispositif selon l'une des revendications 1 à 4, caractérisé en ce que des canaux d'évacuation (5) s'étendant sensiblement verticalement sont raccordés aux ouvertures (11) dans lesquelles débouchent les trémies et ont des sections transversales bien plus petites que les ouvertures d'entrée de fluide (14).

6. Dispositif selon l'une des revendications 1 à 5, caractérisé en ce que les canaux d'entrée de fluide sont réalisés sous forme de cheminées (4) qui partent du milieu de la rainure et qui montent plus haut que les parois inclinées (13a, 13b; 33a, 33b, 34a, 34b) délimitant les trémies (10; 31).

7. Dispositif selon l'une des revendications 1 à 6, caractérisé en ce que les rainures (12) ont un profil en section transversale en forme d'arêtes de toit et que deux rainures parallèles avoisinantes sont délimitées par une faîte (9).

8. Dispositif selon la revendication 6 ou 7, caractérisé en ce que la cheminée (4) est contiguë, par respectivement un coin vertical, à des ouvertures (11) dans lesquelles débouchent les trémies de deux trémies avoisinantes (10).

9. Dispositif selon l'une des revendications 6 à 8, caractérisé en ce que des parois inclinées (34a, 34b) s'étendant transversalement aux parois de délimitation de rainure (33a, 33b) sont contiguës, respectivement, à une cheminée (4) et sont réalisées avec une inclinaison vers l'ouverture (11) dans laquelle débouchent les trémies.

10. Dispositif selon la revendication 9, caractérisé en ce que les parois s'étendant transversalement (34a, 34b) divisent conjointement avec la cheminée associée (4) la rainure en des tronçons (31), dans chaque tronçon étant formée une trémie et une ouverture d'embouchure centrale (11).

11. Dispositif selon la revendication 10, caractérisé en ce que les parois transversales (34a, 34b) de deux tronçons de rainures avoisinantes (31) se rejoignent dans une faîte transversale supérieure (32).

12. Dispositif selon la revendication 11, caractérisé en ce que les faîtes transversaux (32) se situent à un niveau uniforme qui est plus bas ou égal au niveau des faîtes (9) séparant les rainures (12).

13. Dispositif selon l'une des revendications 1 à 12, caractérisé en ce que les canaux d'évacuation (5) ont des ouvertures de sortie inférieures (20) sous lesquelles est disposée à une certaine distance un fond de stockage intermédiaire (21), et en ce qu'un rateau d'évacuation (23) est accroché de façon pivotante à au moins un axe de palier et s'engage dans l'espace entre les ouvertures de sortie et le fond de stockage intermédiaire (21) avec un jeu de mouvement tel qu'il transporte un moyen d'adsorption accumulé sur le fond de stockage intermédiaire (21) transversalement à la direction de versement dans une ouverture d'évacuation latérale.

14. Dispositif selon la revendication 13, caractérisé en ce qu'une commande à manivelle est associée au rateau (23).

## Claims

1. Device for separating undesired components out from a fluid, in particular a waste gas, with a reactor (1), which bounds a reaction chamber (2) and which displays charging means at the head end and a base of discharge funnels (10) arranged in the shape of a raster for the delivery and discharge of a granular or globular adsorption medium at the foot end, wherein inflow openings (14), which are roofed by distributor elements (15) and through which the fluid can flow into the reaction chamber from below, are formed in the base, characterised thereby, that an upwardly open groove (12; 31, 31), in which inflow openings (14) and funnel mouth openings (11) are arranged in alternation, is formed between the oppositely inclined walls (13a, 13b; 33a, 33b) of the base (3; 30) and that each distributor element is constructed as a hood (15), which is like a pyramid or a cone or a frustum of a pyramid or a cone and the lower edges (16) of which are at least in portions vertically spaced from the oppositely inclined walls (13a, 13b; 33a, 33b, 34, 34b) of the base (3; 30) for the formation of fluid passage openings.

2. Device according to claim 1, characterised thereby, that the hood (15) has a maximum cross-sectional dimension extending in the direction of the groove and/or transversely to the direction of the groove.

3. Device according to claim 2, characterised thereby, that each funnel mouth opening (11) is partially roofed by the neighbouring hoods (15).

4. Device according to one of the claims 1 to 3, characterised thereby, that the hoods (15) are formed in the shape of a pyramid or a frustum of a pyramid, wherein two pyramid corners are aligned with the centre line of the associated groove (12) and that an inflow channel (4) of rectangular cross-section is oriented axially to the apex of the pyramid.

5. Device according to one of the claims 1 to 4, characterised thereby, that substantially vertically extending discharge channels (5) are connected to the funnel mouth openings (11) and have substantially smaller cross-sections than the fluid inflow openings (14).

6. Device according to one of the claims 1 to 5, characterised thereby, that the fluid inflow channels are formed as chimneys (4), which go out from the centre of the groove and are drawn higher than the inclined walls (13a, 13b; 33a, 33b, 34a, 34b) bounding the funnels (10; 31).

7. Device according to one of the claims 1 to 6, characterised thereby, that the grooves (12) have a roof-edge-like cross-sectional profile and that two neighbouring parallel grooves are bounded by a ridge (9).

8. Device according to claim 6 or 7, characterised thereby, that the chimney (4) adjoins by a respective vertical corner at the funnel mouth openings (11) of two neighbouring funnels (10).

9. Device according to one of the claims 6 to 8, characterised thereby, that inclined walls (34a, 34b), which extend transversely to the groove boundary walls (33a, 33b), each adjoin a respective chimney (4) and are constructed to be sloping down to the funnel mouth opening (11).

10. Device according to claim 9, characterised thereby, that the transversely extending walls (34a, 34b) together with the associated chimney (4) divide the groove into portions (31), wherein a funnel and a central mouth opening (11) are formed in each portion.

11. Device according to claim 10, characterised thereby, that the transverse walls (34a, 34b) of two neighbouring groove portions (31) converge into an upper transverse ridge (32).

12. Device according to claim 11, characterised thereby, that the transverse ridges (32) lie at a uniform level which is lower than or the same as the level of the ridges (9) separating the grooves (12).

13. Device according to one of the claims 1 to 12, characterised thereby, that the discharge channels (5) have lower exit openings (20), below which an intermediate storage base (21) is arranged at a spacing, and that a discharge rake (23) is pivotably suspended at at least one bearing axle and engages into the space between the exit openings and the intermediate storage base (21) with such play of movement that it transports adsorption medium heaped on the intermediate storage base (21) transversely to the direction of heaping into a lateral discharge opening.

14. Device according to claim 13, characterised thereby, that a crank drive is associated with the rake (23).
